# EUROPÄISCHE PATENTSCHRIFT

(11) **EP 2 696 088 B1**
(45) Veröffentlichungstag und Bekanntmachung des Hinweises auf die Patenterteilung: **23.03.2016**
(21) Anmeldenummer: 13175840.1
(22) Anmeldetag: 10.07.2013
(51) Int. Cl.: F16C 33/66

(54) **Ölstauring**
Oil stowage ring
Anneau de retenue d'huile

(30) Priorität: 08.08.2012 DE 102012214060
(43) Veröffentlichungstag der Anmeldung: 12.02.2014
(73) Patentinhaber: Siemens Aktiengesellschaft, 80333 München (DE)
(72) Erfinder: Sieber, Dirk, 09322 Penig (DE); Steubler, Thomas, 09385 Lugau /Erzgeb. (DE)

(56) Entgegenhaltungen:
- DE-A1- 3 215 823
- GB-A- 1 260 523

## Beschreibung

Die vorliegende Erfindung betrifft einen Ölstauring, eine Maschine mit einem Ölstauring sowie eine Verwendung eines Ölstaurings.

Bei einer Labyrinthabdichtung einer Getriebe- oder Motorwelle muss sichergestellt werden, dass ein in einer Lagerbohrung angeordnetes Wellenlager, welches oberhalb des Ölniveaus im Ölsumpf liegt, ausreichend mit Öl versorgt wird und/oder im Öl wälzen kann. Für eine kontinuierliche Schmierung ist es notwendig, auf der Innenseite der Lagerbohrung eine Staukante zu bilden, hinter der sich das Öl anstauen kann.

Zum Anstauen von Öl in einem Wellenlager sind Staubleche bekannt, welche einen Damm bilden, hinter dem sich Öl sammeln kann. Beispielsweise wird in EP 2574826, A1 (GKN Driveline Köping) 03.04.2013 ein Ölstauring 12 und in US 6474444 B1 (Jatco Transtechnology) 05.11.2002 ein als Öldamm wirkender Innenrand eines Laufrings 15 beschrieben. Ferner zeigt DE 3 215 823 A1 einen Ölstauring gemäß dem Oberbegriff des Anspruchs 1. Da eine Baugröße eines Getriebes oder eines Motors in der Regel mit unterschiedlichen Wellendurchmessern betrieben werden kann, muss das Niveau der Staukante dem jeweiligen Wellendurchmesser angepasst werden. Daher ist pro Baugröße eine Serie von Staubleche für die unterschiedlichen Wellendurchmesser vorzuhalten.

Aufgabe der vorliegenden Erfindung ist es, eine verbesserte Möglichkeit zum Anstauen von Öl in einem Lager zu schaffen.

Diese Aufgabe wird gelöst durch einen Ölstauring zum Anstauen von Öl in einem Lager, mit einem Haltering in Form eines Innen-Seegerrings, und einem an einen Innenumfang des Halterings angesetzten Staukörper, umfassend eine äußere Stauwand und eine entlang einer als Sollbruchstelle dienenden Nut mit der äußeren Stauwand verbundene innere Stauwand.

Die äußere Stauwand liegt bezüglich des Mittelpunkts des Halterings radial weiter außen als die innere Stauwand.

Seegerringe sind in DIN 472 definiert. Ein Innen-Seegerring ist ein Maschinenelement in Form eines offenen Federrings, das lose gelagerte Ringe, Naben usw. in einer Bohrung gegen axiales Verschieben sichert. Ein Innen-Seegerring weist nach innen weisende Ringenden mit darin angeordneten Bohrungen bzw. Löchern auf. In die Bohrungen bzw. Löcher können die Spitzen einer Zange eingeführt werden. Beim Einbau werden die Ringenden mit der Zange so gespreizt, dass der Seegerring in einer Rille in einer Bohrung, einer sogenannten Bohrungsnut, einfedern kann.

Durch die besondere Gestaltung der Außenkontur durch mindestens zwei integrierte Staukanten ist eine Form entstanden, die mehrere unterschiedliche Wellendurchmesser abdeckt. Durch die Ausgestaltung des als Grundkörper fungierenden Halterings als ein Seegerring ist eine einfache Montage mit einer Montagezange, insbesondere einer Seegerringzange, möglich. Durch die vorgegebene Sollbruchstelle ist eine Anpassung an unterschiedliche Wellendurchmesser leicht möglich. Wenn der Wellendurchmesser durch ein gewähltes Übersetzungsverhältnis z. B. größer wird, entfernt man vor der Montage des Ölstaurings die nicht benötigten Elemente des Staukörpers, d. h. eine oder mehrere Stauwände. Durch die einfach veränderbare Form des Ölstaurings - Stichwort: "two in one" - reduziert sich die nötige Teilevielfalt im Getriebebaukasten signifikant.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung der Erfindung ist der Staukörper in einem einer Ringöffnung des Halterings gegenüberliegenden Bereich des Innenumfangs angeordnet ist. Eine Ausrichtung des Staukörpers an den Hauptorientierungsrichtungen erleichtert ein definiertes Einsetzen des Ölstaurings in eine Bohrungsnut und damit ein Einhalten eines definierten Ölstands im Lager.

Gemäß einer bevorzugten Weiterbildung der Erfindung verläuft der Haltering in mindestens einem zwischen einer Ringöffnung und dem Staukörper liegenden Bereich geradlinig. Die Abflachung der Seiten verbessern die Montierbarkeit des Ölstaurings.

Gemäß einer bevorzugten Weiterbildung der Erfindung ist an einer Flanke des Halterings ein Keil angeordnet. Dadurch wird erreicht, dass der Ring nur in einer vorgegeben Orientierung in der Bohrungsnut montiert werden kann. Eine unerwünschte Verdrehung des Rings bei Einsetzen des Rings in eine Bohrungsnut wird durch den bzw. die als Verdrehsicherung wirkenden Keile verhindert. Vorzugsweise ist je ein Keil an beiden Enden des Halterings ausgebildet.

Gemäß einer bevorzugten Weiterbildung der Erfindung besteht der Ölstauring aus Kunststoff. Dadurch werden die Materialkosten gesenkt und die Herstellung des Ölstaurings, z. B. durch ein Druckgussverfahren, erleichtert. Es ist aber ebenfalls möglich, dass der Ölstauring aus einem anderen ölbeständigen Material besteht, z. B. aus einem Metall.

Die oben angegebene Aufgabe wird außerdem gelöst durch eine Maschine, insbesondere ein Getriebe oder ein Motor, mit einem in einer Lagerbohrung angeordneten Wellen- oder Achsenlager, wobei ein Ölstauring nach einem der vorhergehenden Ansprüche in einer Bohrungsnut der Lagerbohrung angeordnet ist.

Die oben angegebene Aufgabe wird außerdem gelöst durch Verwendung eines Ölstaurings, wie oben definiert, zum Anstauen von Öl in einem Lager.

Gemäß einer bevorzugten Weiterbildung der Erfindung umfasst die Verwendung ein Entfernen einer Stauwand entlang einer als Sollbruchstelle dienenden Nut. Die Sollbruchstelle dient also einer Adaption der Ölstaurings an unterschiedliche Wellendurchmesser.

Gemäß einer bevorzugten Weiterbildung der Erfindung umfasst die Verwendung eine Montage und/oder Demontage des Ölstaurings mit einer Seegerringzange oder einer anderen Sicherungsringzange, wobei die Zange in an den Ringenden des Rings angeordnete Bohrungen eingreift.

Die oben beschriebenen Eigenschaften, Merkmale und Vorteile dieser Erfindung sowie die Art und Weise, wie diese erreicht werden, werden klarer und deutlicher verständlich durch die folgende Beschreibung der Ausführungsbeispiele, welche anhand der Zeichnungen näher erläutert werden. Es zeigt jeweils schematisch und nicht maßstabsgetreu
- Fig. 1: den prinzipiellen Aufbau eines erfindungsgemäßen Ölstaurings;
- Fig. 2 - 5: eine Ansicht und Schnitte eines bevorzugtes Ausführungsbeispiels eines Ölstaurings;
- Fig. 6: einen Schnitt eines Wellenlagers in einem Getriebe;
- Fig. 7: eine Ansicht eines in eine Bohrungsnut eingesetzten Ölstaurings für einen ersten Wellendurchmesser; und
- Fig. 8: eine Ansicht eines in eine Bohrungsnut eingesetzten Ölstaurings für einen zweiten Wellendurchmesser.

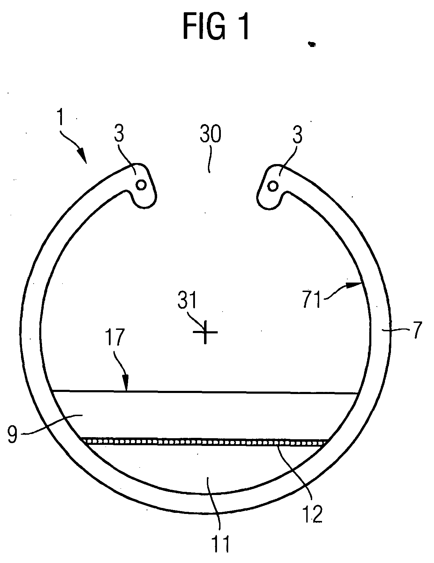

Fig. 1 zeigt den prinzipiellen Aufbau eines erfindungsgemäßen Ölstaurings 1. Der Ölstauring 1 umfasst einen flachen Haltering 7 in Form eines Innen-Seegerrings, d.h. eines im Bereich einer Ringöffnung 30 offenen Federrings mit nach innen weisenden Ringenden 3. Der Ölstauring 1 umfasst außerdem einen Staukörper 17, welcher eine innere Stauwand 9 und eine äußere Stauwand 11 umfasst. Der Staukörper 17 ist unmittelbar an dem Innenumfang 71 des Halterings 7 angeordnet, vorzugsweise in einem Bereich des Innenumfangs 71, welcher der zwischen den Ringenden 3 liegenden Ringöffnung 30 in Bezug auf die Ringmitte 31 gegenüber liegt. Die Verbindung des Staukörpers 17 mit dem Haltering 7 ist flüssigkeitsdicht ausgebildet.

Es ist auch möglich, dass der Staukörper 17 mehr als zwei Stauwände 9, 11 umfasst. Dabei ist jede der Stauwände 9, 11 von einer radial weiter außen liegenden Stauwand ablösbar, so dass die offene Innenfläche des Halterings 7 vergrößert wird. Um das Entfernen einer Stauwand 9, 11 in einer definierten Art und Weise zu ermöglichen, weist der Staukörper 17 an der Kontaktstelle zwischen zwei aneinander grenzenden Stauwänden 9, 11 eine als Sollbruchstelle fungierende Materialverdünnung 12 auf.

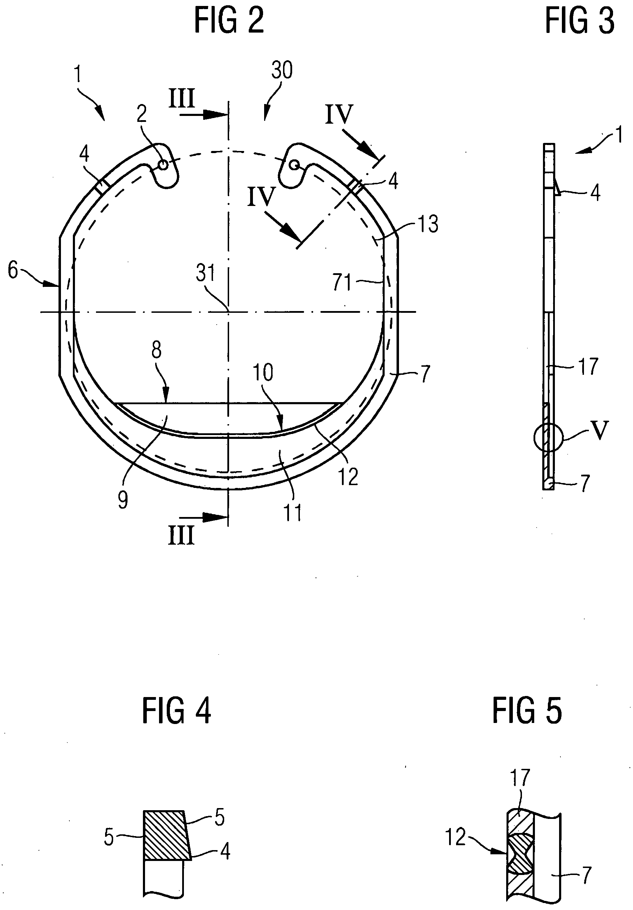

Fig. 2 zeigt ein bevorzugtes Ausführungsbeispiel eines Ölstaurings 1. Der Ölstauring 1 umfasst einen Haltering 7 in Form eines Seegerrings. In den zur Ringmitte 31 hin gebogenen Ringenden 3 des Halterings 7 sind Löcher 2 ausgebildet, z. B. durch Bohren. Die Achsen der Bohrungen 2 verlaufen im Wesentlichen parallel zur Ringachse. Die Bohrungen 2 liegen auf einem Grundkreis 13, der den Verlauf des Halterings 7 in der Ringhälfte vorgibt, welche der Ringöffnung 30 des offenen Halterings 7 gegenüber liegt. Gegenüber der Ringöffnung 30 des offenen Halterings 7 schließt eine äußere Stauwand 11 unmittelbar an den Haltering 7 an. In Bezug auf die äußere Stauwand weiter zur Ringmitte 31 hin gelegen schließt eine innere Stauwand 9 an die äußere Stauwand 11 an.

Die zur Ringmitte 31 hin gelegene Außenkante 8 der inneren Stauwand 9 dient, wenn der Ölstauring 1 in eine Lagerbohrung eines Getriebes eingesetzt ist, als eine obere Ölstaukante. Die zur Ringmitte 31 hin gelegene Außenkante 10 der äußeren Stauwand 11 dient, wenn der Ölstauring 1 in eine Lagerbohrung eines Getriebes eingesetzt ist, als eine untere Ölstaukante. Je nach gewünschtem Ölstand bzw. Wellendurchmesser kann eine oder mehrere Stauwände 9, 11 aus dem Ölstauring 1 entfernt werden, z.B. durch Herausbrechen der Stauwand 9, 11 mit der Hand oder einem Werkzeug, z. B. einer Zange.

Der Haltering 5 weist abgeflachte Seitenflächen 6 auf. Dies erleichtert die Montage des Ölstaurings in einer Lagerbohrung.

Fig. 3 zeigt einen Schnitt des in Fig. 2 dargestellten Ölstaurings 1 entlang der Schnittachse III. Man erkennt, dass der Staukörper 17 dünner als der Haltering 7 ausgebildet ist. In den beiden Bereichen des Halterings 7, die zwischen den geradlinig verlaufenden Seitenflächen 6 und den Ringenden 3 liegen, weist eine Flanke des Halterings 7 je eine keilförmige Verdickung 4 auf. Dies dient zur Verdrehsicherung; der Ölstauring 1 kann somit nur in einer Orientierung in eine Bohrungsnut eingesetzt werden.

Fig. 4 zeigt einen Schnitt des in Fig. 2 dargestellten Ölstaurings 1 entlang der Schnittachse VI. Der Schnitt zeigt die keilförmige Verdickung 4, die an einer Flanke 5 des Halterings 7 angeordnet ist.

Fig. 5 zeigt eine Vergrößerung des in Fig. 3 markierten Bereichs V. Das vergrößerte Detail veranschaulicht die reduzierte Dicke der Stauwand 17 im Bereich der Sollbruchstelle 12. Die Dickenreduktion ist in Form einer Nut auf jeder Flanke der Stauwand 17 ausgeführt.

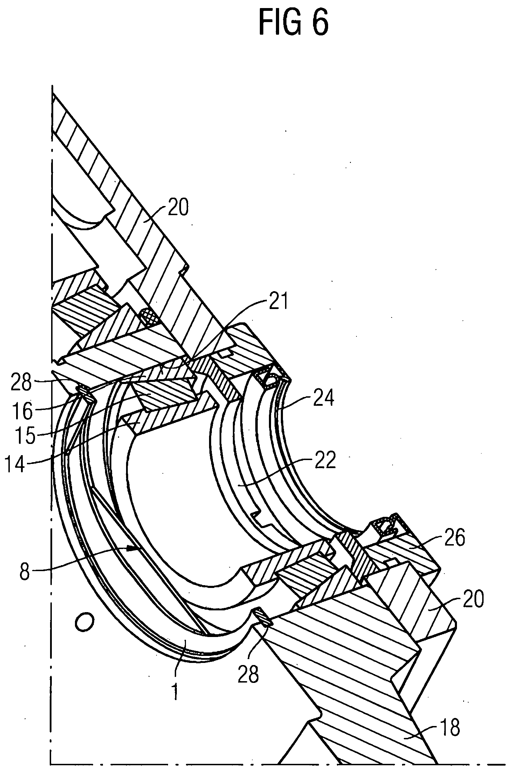

Fig. 6 zeigt einen Schnitt durch ein Wellenlager eines Getriebes. In einer Lagerbohrung 21 in einem Getriebegehäuse 18 ist ein Wellenlager eingesetzt, umfassend einen Lageraußenring 16, einen Lagerinnenring 14 und dazwischen angeordnete Walzen 15. Auf der dem Getriebeinneren zugewandten Seite des Lagers ist ein erfindungsgemäßer Ölstauring 1 in eine rechteckige Bohrungsnut 28 eingesetzt. Auf der dem Getriebeäußeren zugewandten Seite des Lagers ist ein herkömmlicher Außen-Ölstauring 22 angeordnet, z. B. ein metallischer Ölstauring mit mindestens einer zur Ölführung geeigneten Nut.

An der Außenseite des Getriebegehäuses 18 ist ein Lagerdeckel 20 angebaut. In dem Lagerdeckel 20 und auf der Außenseite des Außen-Ölstaurings 22 ist eine Aufnahmebuchse 26 angeordnet, in der ein Labyrinthring 24 eingesetzt ist. Der Labyrinthring 24 dichtet den Ringspalt um eine in Fig. 6 nicht dargestellte Welle ab, so dass der Getriebeinnenraum gegenüber der Umgebung des Getriebes abgedichtet ist. Dadurch wird ein Austreten von Öl aus dem Getriebe verhindert.

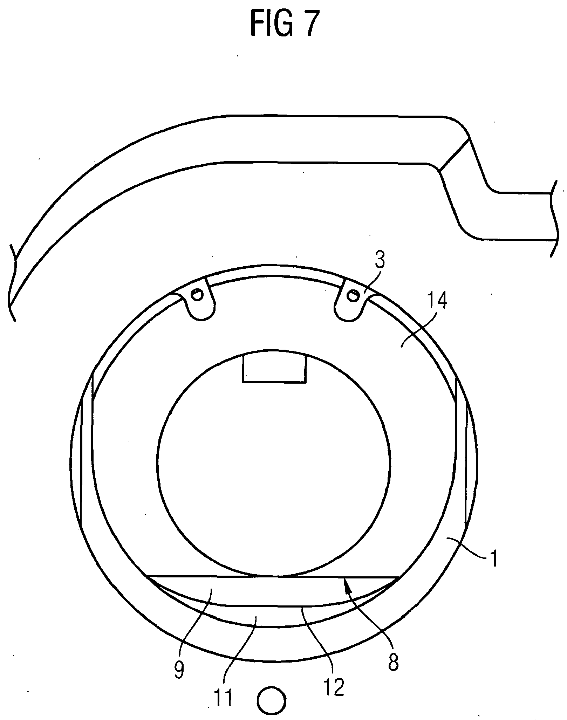

Fig. 7 zeigt eine Ansicht auf den in Fig. 6 dargestellten Ölstauring 1, der an eine Welle mit einem ersten Durchmesser angepasst ist, vom Inneren des Getriebes aus. Der Ölstauring 1 ist in eine Bohrungsnut eingesetzt. Die Ringenden 3 mit den zur Montage dienenden Bohrungen ragen über den Lagerinnenring 14 zur Achse des Lagerinnenrings 14. Unterhalb der nicht dargestellten Welle mit einem ersten Durchmesser, die in dem Lagerinnenring 14 gelagert werden kann, ist die innere Staukante 8 der inneren Stauwand erkennbar, die mittels einer Nut 12 mit der äußeren Stauwand 11 des Staukörpers verbunden ist.

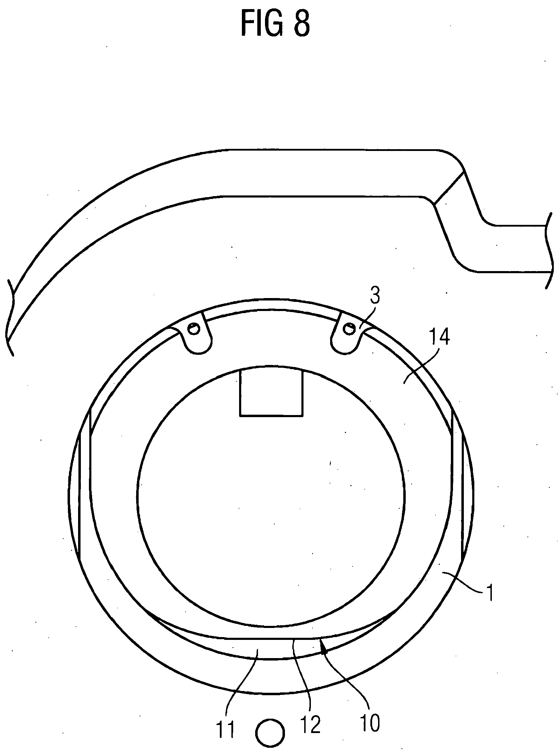

Fig. 8 zeigt eine mit Fig. 7 zu vergleichende Ansicht auf den in Fig. 6 dargestellten Ölstauring 1 vom Inneren des Getriebes aus, wobei Ölstauring 1 an eine Welle mit einem zweiten Durchmesser angepasst ist, der größer als der erste Durchmesser gemäß Fig. 7 ist. Zur Anpassung an den größeren Wellendurchmesser wurde nicht nur ein Lagerinnenring 14 mit einem größeren Innendurchmesser eingesetzt, sondern auch die innere Stauwand des Staukörpers aus dem Ölstauring 1 entfernt. Auf diese Weise dient die äußere Ölstaukante 10, die niedriger als die in Fig. 7 gezeigte innere Ölstaukante 8 liegt, zum Anstauen von Öl.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen im Rahmen der anliegenden Ansprüche können vom Fachmann hieraus abgeleitet werden, ohne den Schutzumfang der Erfindung zu verlassen.

## Patentansprüche

1. Ölstauring (1) zum Anstauen von Öl in einem Lager (14, 15, 16), mit
- einem Haltering (7) in Form eines Innen-Seegerrings, **dadurch gekennzeichnet, dass** der Ölstauring
- einen an einen Innenumfang (71) des Halterings (7) angesetzten Staukörper (17), umfassend eine äußere Stauwand (11) und eine entlang einer als Sollbruchstelle dienenden Nut (12) mit der äußeren Stauwand (11) verbundene innere Stauwand (9), umfasst.

2. Ölstauring (1) nach Anspruch 1, wobei der Staukörper (17) in einem einer Ringöffnung (30) des Halterings (7) gegenüberliegenden Bereich des Innenumfangs (71) angeordnet ist.

3. Ölstauring (1) nach Anspruch 1 oder 2, wobei der Haltering (7) in mindestens einem zwischen einer Ringöffnung (30) des Halterings (7) und dem Staukörper (17) liegenden Bereich (6) geradlinig verläuft.

4. Ölstauring (1) nach einem der vorhergehenden Ansprüche, wobei an einer Flanke (5) des Halterings (7) ein Keil (4) angeordnet ist.

5. Ölstauring (1) nach einem der vorhergehenden Ansprüche, wobei der Ölstauring (1) aus Kunststoff besteht.

6. Maschine mit einem in einer Lagerbohrung (21) der Maschine angeordneten Lager (14, 15, 16), wobei ein Ölstauring (1) nach einem der vorhergehenden Ansprüche in einer Bohrungsnut (28) der Lagerbohrung (21) angeordnet ist.

7. Verwendung eines Ölstaurings (1) nach einem der Ansprüche 1 bis 5 zum Anstauen von Öl in einem Lager (14, 15, 16).

8. Verwendung nach Anspruch 7, umfassend ein Entfernen einer Stauwand (9, 11) entlang einer als Sollbruchstelle dienenden Nut (12).

9. Verwendung nach Anspruch 7 oder 8, umfassend eine Montage und/oder Demontage des Ölstaurings (1) mit einer Seegerringzange.

## Claims

1. Oil retaining ring (1) for retaining oil in a bearing (14, 15, 16), with
- a holding ring (7) in the form of a internal Seeger circlip ring,
**characterised in that** the oil retaining ring comprises
- a baffle (17) placed on an inner periphery (71) of the holding ring (7), comprising an outer retaining wall (11) and an inner retaining wall (9) connected to the outer retaining wall (11) along a groove (12) serving as a rupture joint.

2. Oil retaining ring (1) according to claim 1, wherein the baffle (17) is arranged in a region of the inner periphery (71) facing a ring opening (30) of the holding ring (7).

3. Oil retaining ring (1) according to claim 1 or 2, wherein the holding ring (7) extends in a straight line in at least one region (6) lying between a ring opening (30) of the holding ring (7) and the baffle (17).

4. Oil retaining ring (1) according to one of the preceding claims, wherein a wedge (4) is arranged on an edge (5) of the holding ring (7).

5. Oil retaining ring (1) according to one of the preceding claims, wherein the oil retaining ring (1) is made of plastic.

6. Machine with a bearing (14, 15, 16) arranged in a bearing bore (21) of the machine, wherein an oil retaining ring (1) according to one of the preceding claims is arranged in a bore groove (28) of the bearing bore (21).

7. Use of an oil retaining ring (1) according to one of claims 1 to 5 for retaining oil in a bearing (14, 15, 16).

8. Use according to claim 7, comprising the removal of a retaining wall (9, 11) along a groove (12) serving as a rupture joint.

9. Use according to claim 7 or 8, comprising the assembly and/or disassembly of the oil retaining ring (1) with Seeger circlip pliers.

## Revendications

1. Anneau ( 1 ) de retenue d'huile pour retenir de l'huile dans un palier ( 14, 15, 16 ) comprenant
- un anneau ( 7 ) de maintien sous la forme d'un anneau de Seeger intérieur, **caractérisé en ce que** l'anneau de retenue d'huile comprend
- un corps ( 17 ) de retenue mis sur un pourtour ( 71 ) intérieur de l'anneau ( 7 ) de maintien et comprenant une paroi ( 11 ) extérieure de retenue et une paroi ( 9 ) intérieure de retenue reliée, le long d'une rainure ( 12 ) servant de point destiné à se rompre, à la paroi ( 11 ) extérieure de retenue.

2. Anneau ( 1 ) de retenue d'huile suivant la revendication 1, dans lequel le corps ( 17 ) de retenue est disposé dans une partie du pourtour ( 71 ) intérieur opposée à une ouverture ( 30 ) annulaire de l'anneau ( 7 ) de maintien.

3. Anneau ( 1 ) de retenue d'huile suivant la revendication 1 ou 2, dans lequel l'anneau ( 7 ) de maintien s'étend en ligne droite dans au moins une partie se trouvant entre une ouverture ( 30 ) annulaire de l'anneau ( 7 ) de maintien et le corps de retenue.

4. Anneau ( 1 ) de retenue d'huile suivant l'une des revendications précédentes, dans lequel un coin ( 4 ) est mis sur un flanc ( 5 ) de l'anneau ( 7 ) de maintien.

5. Anneau ( 1 ) de retenue d'huile suivant l'une des revendications précédentes, dans lequel l'anneau ( 1 ) de retenue d'huile est en matière plastique.

6. Machine ayant un palier ( 14, 15, 16 ) disposé dans un alésage ( 21 ) de palier de la machine, un anneau ( 1 ) de retenue d'huile suivant l'une des revendications précédentes étant mis dans une rainure ( 28 ) de l'alésage ( 21 ) de palier.

7. Utilisation d'un anneau ( 1 ) de retenue d'huile suivant l'une des revendications 1 à 5 pour retenir de l'huile dans un palier ( 14, 15, 16 ).

8. Utilisation suivant la revendication 7, comprenant une élimination d'une paroi ( 9, 11 ) de retenue le long d'une rainure ( 12 ) servant de point destiné à se rompre.

9. Utilisation suivant la revendication 7 ou 8, comprenant un montage et/ou un démontage de l'anneau ( 1 ) de retenue d'huile par une pince à anneau de Seeger.
